Europäisches Patentamt

European Patent Office

Office européen des brevets

(19)

(11) Veröffentlichungsnummer : **0 112 968**
**B1**

(12)  # EUROPÄISCHE PATENTSCHRIFT

(45) Veröffentlichungstag der Patentschrift :
13.12.89

(51) Int. Cl.⁴ : **B 60 R   1/06**

(21) Anmeldenummer : 83108700.2

(22) Anmeldetag : 03.09.83

---

(54) **Verstellbarer Rückblickspiegel für Kraftfahrzeuge wie PKW.**

---

(30) Priorität : 30.12.82 DE 8236802 U

(43) Veröffentlichungstag der Anmeldung :
11.07.84 Patentblatt 84/28

(45) Bekanntmachung des Hinweises auf die Patenterteilung : 13.12.89 Patentblatt 89/50

(84) Benannte Vertragsstaaten :
**BE DE FR GB IT NL SE**

(56) Entgegenhaltungen :
DE--A-- 1 680 015
DE--B-- 2 239 257
GB--A-- 1 188 007
US--A-- 4 171 875

(73) Patentinhaber : **Metallwerk FRESE GmbH**
**Moltkestrasse 25**
**D-5653 Leichlingen (DE)**

(72) Erfinder : **Klein, Manfred**
**Moltkestrasse 32**
**D-5653 Leichlingen (DE)**

(74) Vertreter : **Gille, Christian, Dipl.-Ing. et al**
**Türk, Gille + Hrabal Patentanwälte Bruckner Strasse**
**20**
**D-4000 Düsseldorf 13 (DE)**

EP 0 112 968 B1

## Beschreibung

Die Erfindung betrifft einen verstellbaren Rückblickspiegel für Kraftfahrzeuge wie PKW, mit einen an einem Tragarm gehaltenen Lager und einer gegenüber diesen zwischen zwei Kipp-Stellungen mittels eines Unterdrucksystems verstellbaren Spiegelscheibe, wobei das Unterdrucksystem eine an eine Saugleitung angeschlossene Unterdruckdose aufweist.

Verstellbare Rückblickspiegel sind sowohl zur Anbringung im Kraftfahrzeug als auch auf der Außenseite der Karosserie bekannt. Im erstgenannten Fall ist die Spiegelscheibe im Querschnitt keilförmig ausgebildet, wobei die Scheibe um eine etwa horizontal verlaufende Achse gekippt werden kann, so daß je nach Kipp-Stellung die Vorderseite oder die Rückseite der Spiegelscheibe den Hauptteil der Spiegelreflexion bewirkt, damit beim Auffallen von Blendlicht der Spiegel in eine Abblendstellung gebracht werden kann. Andererseits ist bei Außenrückblickspiegeln mit in zwei Stellungen verstellbarer Spiegelscheide diese um eine etwa senkrecht verlaufende Achse kippbar im Gehäuse gelagert, so daß es möglich ist, vor dem Wechseln der Fahrspur eine Verstellung der Spiegelscheibe zum Erfassen des sogenannten toten Winkels vorzunehmen. Im letztgenannten Fall kann die Verstellung der Spiegelscheibe über den Fahrtrichtungsanzeige erfolgen, d.h. die Spiegelscheibe wird in die den toten Winkel erfassende Lage gekippt, wenn man den Blinkerbetätigungshebel betätigt, um einen Spurwechsel anzuzeigen, insbesondere wenn der Spurwechsel auf die Überholspur vorgenommen werden soll.

Bei den vorbekannten verstellbaren Rückblickspiegeln erfolgt die Verstellung der Spiegelscheibe mechanisch von Hand oder elektrisch mittels Elektromotoren oder Stellmagneten : Die Verstellung von Hand ist bei Innenrückblickspiegeln weit verbreitet, hat jedoch den Nachteil, daß zusätzliche Handgriffe notwendig sind, welche die Aufmerksamkeit des Fahrers erfordern und ihn von seiner eigentlichen Aufgabe, das Verkehrsgeschehen zu beobachten, ablenken. Die Verstellung mittels Elektromotoren oder Elektromagneten ist verhältnismäßig aufwendig und daher kostspielig, weil besondere Antriebselemente, nämlich die Elektromotore oder Elektromagneten, erforderlich sind, die das Gewicht des Spiegels und damit die Vibrationsgefahr erhöhen.

Aus der DE-A-1 680 015 ist gemäß dem Oberbegriff des Anspruchs 1 eine Vorrichtung zum Vermindern der Blendgefahr bei Kraftfahrzeugen bekannt, welche einen Innen- und einen Außenrückblickspiegel aufweist, wobei zum Verstellen der Spiegelscheiben zwischen den beiden Extremstellungen ein Unterdrucksystem vorgesehen ist, das vom Fahrer mittels eines Handschalters gesteuert wird. Für die Verstellung der Spiegelscheibe ist dann ein an eine Saugleitung angeschlossener Balg und eine diesem entgegenwirkende Druckfeder vorgesehen. Der Balg ist ein zusätzliches Bauteil und verhältnismäßig klein, so daß er die Kraft der Druckfeder nur überwinden kann, wenn im Saugsystem ein verhältnismäßig hoher Unterdruck herrscht. Daher ist bei dieser vorbekannten Stellvorrichtung ein sicheres Verstellen durch Unterdruck nicht gewährleistet.

Der Erfindung liegt die Aufgabe zugrunde, die Verstellbarkeit von Rückspiegeln der eingangs genannten Gattung zu verbessern und eine neuartige automatisch arbeitende Verstelleinrichtung für die Spiegelscheibe zu schaffen, welche preiswert und betriebssicher ist und das Gewicht des Spiegels nicht unnötig erhöht.

Diese Aufgabe wird erfindungsgemäß durch einen verstellbaren Rückblickspiegel mit den Merkmalen des Kennzeichens von Anspruch 1 gelöst.

Beim neuen Rückblickspiegel ist als Auslöser zum Betätigen des Unterdrucksystems wenigstens eine Fotozelle, die entsprechend der Stärke des einfallenden Lichtes Steuersignale zum Verstellen eines Steuerventiles des Unterdrucksystems liefert, vorgesehen, weiterhin besteht die Unterdruckdose des Unterdrucksystems aus einer am Tragarm gehaltenen Lagerplatte, an der das Gehäuse, und einer gegenüber dieser kippbaren Tragplatte, an der die Spiegelscheibe befestigt ist.

Das Unterdrucksystem kann beispielsweise am Ansaugkrümmer des Fahrzeugmotors hinter dem Drucksicherungsventil angeschlossen werden. Da eine Verstellung der Spiegelscheibe nur bei laufendem Motor erfolgen soll, d. h. bei fahrendem Fahrzeug, braucht noch nicht einmal ein geschlossenes Unterdrucksystem verwendet zu werden. Vielmehr reicht es aus, wenn der Unterdruck unmittelbar vom laufenden Motor erzeugt wird. Da als Auslöser zum Betätigen des Unterdrucksystems eine Photozelle vorgesehen ist, die bei einer auf sie einfallenden gewissen Mindestlichtmenge ein Steuersignal zum Verstellen eines Steuerventiles des Unterdrucksystems liefert, ist eine automatische Verstellung gewährleistet, und zwar dann, wenn von hinten ein Fahrzeug mit stark leuchtenden Scheinwerfern auffährt. Im Normalfall befindet sich der Rückblickspiegel daher in der üblichen Spiegelposition, d. h. eine Abblendung erfolgt nur dann, wenn es wirklich notwendig ist.

Vorzugsweise ist die Tragplatte mit der Lagerplatte nahe einem Rand über ein Schwenkgelenk kippbar verbunden, wobei dem Schwenkgelenk gegenüberliegend zwischen Tragplatte und lagerplatte eine diese auseinanderdrückend vorgespannte Druckfeder vorgesehen ist.

Lagerplatte und Tragplatte können an ihren Rändern über eine verstellbare Dichtung miteinander in Verbindung stehen. Das Unterdrucksystem ist aus in das Gehäuse eingebauten und gegeneinander kippbaren Bauteilen zusammengesetzt. Eine derartige Unterdruckdose läßt sich verhältnismäßig einfach und daher auch für Massenartikel preiswert herstellen.

Diese Merkmale und Vorteile der Erfindung ergeben sich aus der nachfolgenden Zeichnungsbeschreibung und den Ansprüchen.

In der Zeichnung sind Ausführungsbeispiele des erfindungsgemäßen verstellbaren Rückblickspiegels schematisch dargestellt, und zwar zeigt

Figur 1 einen senkrechten Querschnitt einer ersten Ausführungsform des Rückblickspiegels nach Linie I-I aus Figur 2,

Figur 2 eine Vorderansicht des Rückblickspiegels aus Figur 1, wobei die vorderen Teile weggelassen sind,

Figur 3 einen senkrechten Querschnitt ähnlich wie in Figur 1 einer zweiten Ausführungsform des Rückblickspiegels,

Figur 4 einen senkrechten Querschnitt einer dritten Ausführungsform des verstellbaren Rückblickspiegels,

Figur 5 einen senkrechten Querschnitt einer vierten Ausführungsform des verstellbaren Rückblickspiegels,

Figur 6 eine Vorderansicht des Rückblickspiegels aus Figur 5, wobei die einzelnen Teile nur in Umrißlinien angedeutet sind,

Figur 7 einen senkrechten Schnitt nach einer weiteren Ausführungsform des verstellbaren Rückblickspiegels und

Figur 8 eine Vorderansicht eines verstellbaren Innenrückblickspiegels für Kraftfahrzeuge mit in Form eines Blockschaltbildes dargestellter Verstelleinrichtung.

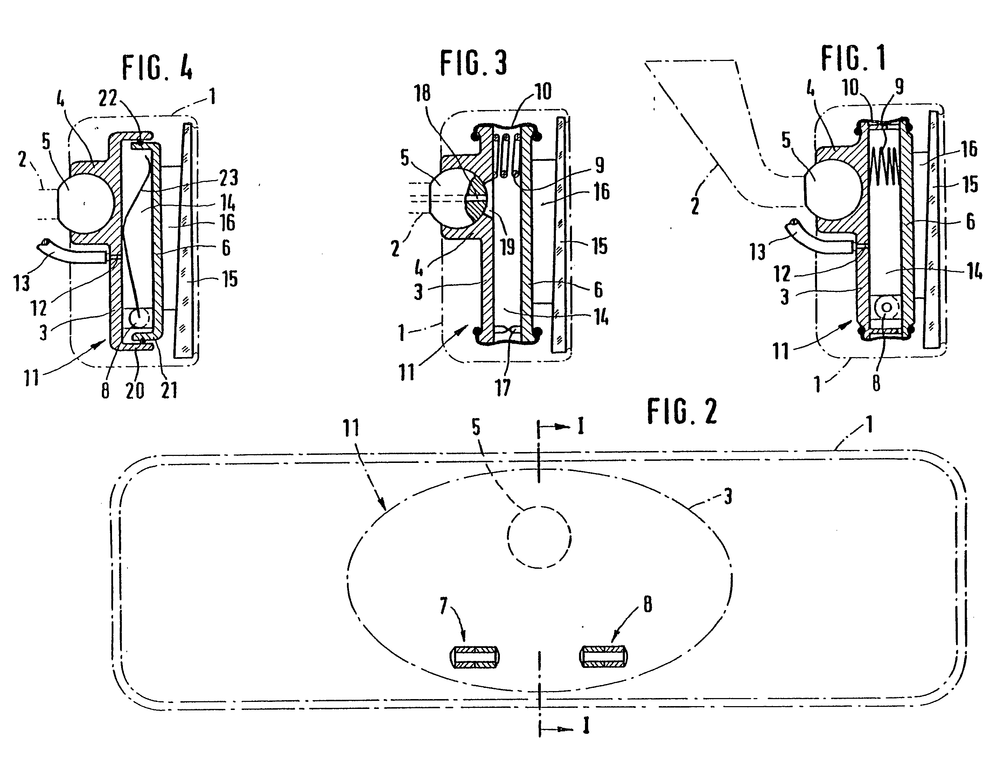

Der in Figuren 1 und 2 dargestellte verstellbare Rückblickspiegel für Kraftfahrzeuge wie PKW hat ein Gehäuse 1, das an einem Arm 2 in nicht näher dargestellter Weise an der Karosserie des Kraftfahrzeuges angebracht wird. Im Gehäuse 1 ist eine Lagerplatte 3 untergebracht, die einen als Gelenkpfanne ausgebildeten Ansatz 4 aufweist, in dem eine am Arm 2 vorgesehene Kugel 5 steckt, so daß die Lagerplatte 3 gelenkig mit dem Arm 2 verbunden ist.

Die Lagerplatte 3 ist am Gehäuse 1 befestigt, und zwar mittels des Ansatzes 4, so daß das Gehäuse 1 gemeinsam mit der Lagerplatte 3 gegenüber dem Arm 2 verstellt werden kann.

An der Vorderseite der Lagerplatte 3 ist eine Tragplatte 6 angeordnet, die mittels zwei Scharnier-Gelenken 7 und 8 kippbar mit der Lagerplatte 3 verbunden ist. Die Scharniergelenke 7 und 8 befinden sich im unteren Bereich von Lagerplatte 3 und Tragplatte 6. Im oberen Bereich erstreckt sich zwischen Lagerplatte 6. Im oberen Bereich erstreckt sich zwischen Lagerplatte 3 und Tragplatte 6 eine Druckfeder 9, welche diese beiden Platten in die in Fig. 1 dargestellte Lage auseinanderdrückt. Ein beide Platten 3 und 6 übergreifender umlaufender faltbarer Balg 10 verhindert, daß die beiden Platten 3 und 6 weiter als in Fig. 1 dargestellt auseinandergedrückt werden können, d. h. der Balg 10 bestimmt die in Fig. 1 dargestellte eine Endlage der gegeneinander kippbaren Platten 3 und 6. Außerdem bildet der Balg 10 einen luftdichten Abschluß nach außen, so daß die Lagerplatte 3, die Tragplatte 6 und der Balg 10 eine nach außen gekapselte Unterdruckdose 11 bilden. Diese Unterdruckdose ist, wie Fig. 2 zeigt, in Draufsicht oval ausgebildet.

Die Lagerplatte 3 enthält eine durchgehende Öffnung 12, an die ein Schlauch 13 angeschlossen ist, der an eine nicht dargestellte Saugleitung angeschlossen werden kann, um im Innenraum 14 der Druckdose 11 einen Unterdruck zu erzeugen. Ist dieser Unterdruck groß genug, um die Kraft der Druckfeder 9 zu überwinden, wird die Tragplatte 6 um die Scharniergelenke 7 und 8 in Richtung der Lagerplatte 3 verschwenkt, wodurch ein Spiegelglas 15, das mittels eines Abstandhalters 16 an der Tragplatte 6 befestigt ist, aus der in Fig. 1 dargestellten Lage in eine Kipplage gekippt wird. Diese Kipplage entspricht der Abblendposition der im Querschnitt keilförmigen Spiegelscheibe 15.

Sobald der Unterdruck im Innenraum 14 wieder aufgehoben wird, beispielsweise indem man die Verbindung zwischen dem Schlauch 13 und der nicht dargestellten Saugleitung unterbricht, drückt die Druckfeder 9 die Tragplatte 6 wieder in die in Fig. 1 dargestellte Grundstellung, welche der normalen Spiegelstellung der Spiegelscheibe 15 entspricht.

Die Ausführungsform gemäß Fig. 3 unterscheidet sich von der Ausführungsform gemäß Fig. 1 im wesentlich dadurch, daß Lagerplatte 3 und Tragplatte 6 über Filmscharniere 17 gelenkig miteinander verbunden sind. Ferner enthält der Tragarm 2 und die an ihm angebrachte Kugel 5 eine durchgehende Bohrung 18, die in einer in das Pfannengelenk des Ansatzes 4 führenden Öffnung 19 mündet und durch die der zum Verstellen der Tragplatte 6 benötigte Unterdruck im Innenraum 14 erzeugt wird.

Bei der Ausführungsform gemäß Fig. 4 ist die Lagerplatte 3 mit einem umlaufenden vorstehenden Rand 20 versehen, der einen ähnlichen umlaufenden vorstehenden Rand 21 der Tragplatte 6 übergreift. Zwischen beiden ist ein O-Ring 22 als Dichtung vorgesehen, um den Innenraum 14 der Druckdose 11 nach außen derart abzudichten, daß im Innenraum 14 der für die Verstellung benötigte Unterdruck erzeugt werden kann. Eine Blattfeder 23 drückt die Lagerplatte 3 und die Tragplatte 6 auseinander, wobei die Scharniergelenke 7 und 8 Endanschläge aufweisen können, welche die in Figur 4 dargestellte eine Endlage dieser beiden Platten bestimmen. Die andere Endlage der kippbar miteinander verbundenen Platten 3 und 6 kann beispielsweise durch den umlaufenden Rand 21 der Tragplatte 6 bestimmt sein, d. h. wenn dieser gegen die Vorderseite der Lagerplatte 3 zur Anlage kommt.

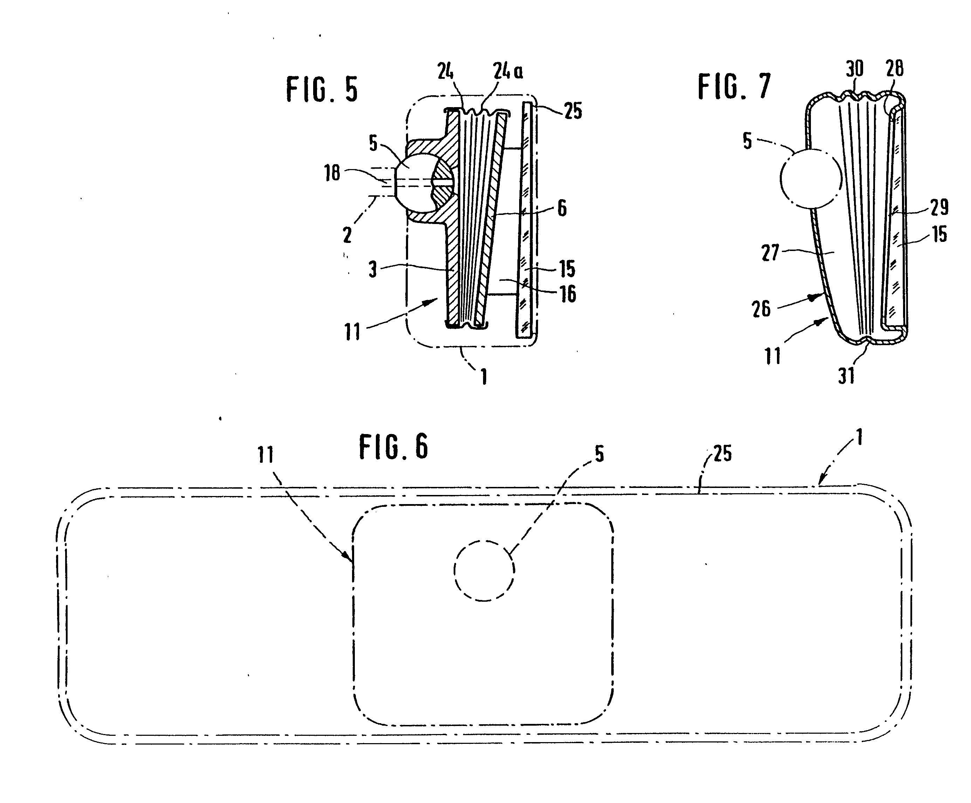

Bei der Ausführungsform gemäß Figur 5 und 6 sind die die Druckdose 11 bildenden Platten 3 und 6 in Draufsicht im wesentlichen rechteckig, wie Figur 6 zeigt. Beide Platten 3 und 6 werden von einem ziehharmonikaartig ausgebildeten flexiblen Balg 24 umschlossen, der derart ausgebildet ist, daß die Lagerplatte 3 und die Tragplatte 6 in der normalen Grundstellung der Spiegelscheibe 15 schräg zueinander stehen, wie Figur 5 zeigt.

Diese Lage kann dadurch bestimmt werden, daß die Spiegelscheibe 14 sich von innen an einen an der Vorderseite des Gehäuses 1 befindlichen umlaufenden Rand 25 legt. Die Kipp-Stellung der Spiegelscheibe 15 wird entweder durch einen nicht dargestellten Endanschlag zwischen den Platten 3 und 6 oder dadurch bestimmt, daß die Faltungen 24a des faltbaren Balges 24 sich aneinanderlegen und dann eine weitere Kippbewegung der Tragplatte 6 gegenüber der Lagerplatte 3 verhindern.

Bei der Ausführungsform gemäß Figur 7 ist das Gehäuse 26 in sich flexibel ausgebildet, so daß die Kippbewegungen der Spiegelscheibe 15 durch Bewegungen der Geäusewand herbeigeführt werden.

Bei dieser Ausführungsform bildet das beispielsweise in Kunststoff einstückig gespritzte Gehäuse 26 die luftdicht gekapselte Undruckdose 11. Von der Rückseite ragt in das Gehäuse 26 die Kugel 5 des nicht näher dargestellten Tragarmes 2 derart hinein, daß ein luftdichter Abschluß gewährleistet ist. Die Kugel 5 enthält die in Fig. 4 und 5 dargestellte Bohrung 18, um im Innenraum 27 des Gehäuses 26 den zum Verstellen der Spiegelscheibe 15 benötigten Unterdruck zu erzeugen.

An der Vorderseite des Gehäuses 26 ist in dieses eine Ausnehmung 28 eingelassen, welche die im Querschnitt keilförmige Spiegelscheibe 15 aufnimmt. Diese Spiegelscheibe 15 bildet einen luftdichten Abschluß, falls der Boden der Ausnehmung 28 eine Öffnung 29 enthält, wie in Fig. 7 dargestellt.

Die umlaufende Seitenwand des Gehäuses 26 ist mit einer balgförmigen Faltung 30 versehen, die sich, falls im Innenraum 27 des Gehäuses 26 ein ausreichender Unterdruck erzeugt wird, zusammenzieht, so daß die Spiegelscheibe 15 aus der in Fig. 7 dargestellten Lage in eine Kipplage verstellt wird. Fig. 7 zeigt, daß die Faltung 30 im oberen Bereich des Gehäuses 26 breiter als im unteren Bereich ist, so daß die gewünschte Kippbewegung der Spiegelscheibe 15 um die einzige untere Falte 31, die wie eine Art Scharnier-Gelenk wirkt, erfolgt.

Zur Begrenzung der Kippbewegung der Spiegelscheibe 15 kann im Gehäuse 26 ein nicht dargestellter Endanschlag vorgesehen sein.

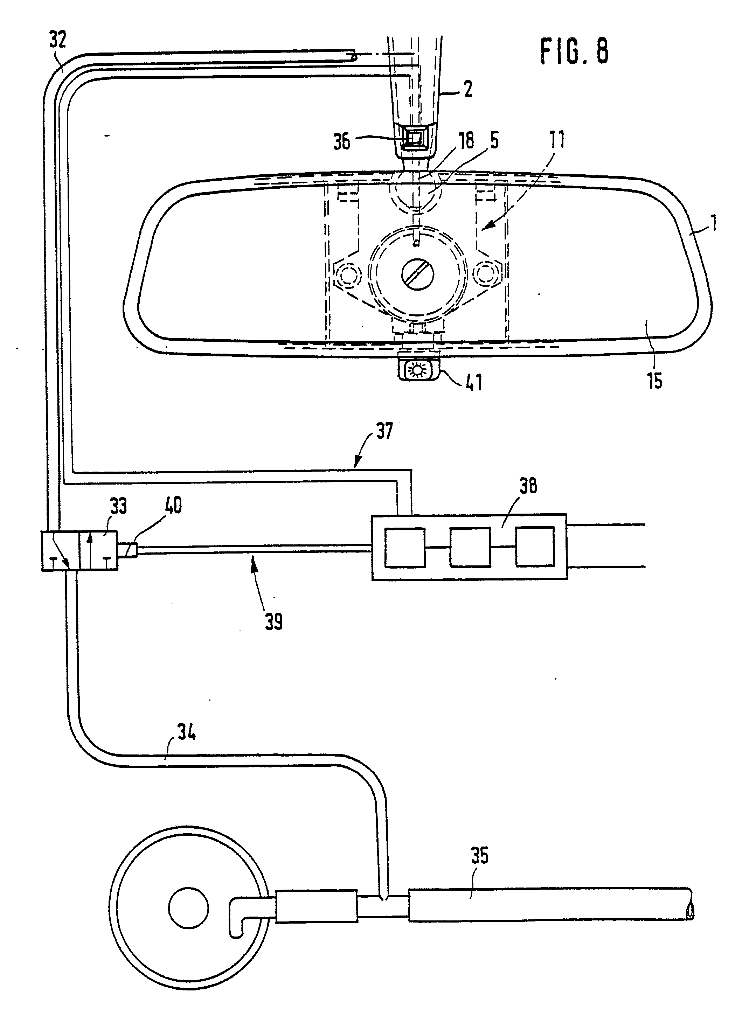

In Fig. 8 ist angedeutet, wie die Verstellung der Spiegelscheibe 15 mittels Unterdruck selbsttätig durchgeführt wird.

An die die Kugel 5 und den Arm 2 durchsetzende Bohrung 18 oder bei den Ausführungsformen gemäß Fig. 1 und 4, an den Schlauch 13, ist eine Schlauchleitung 32 angeschlossen, die zu einem Schieberventil 33 führt. Dieses Schieberventil kann in der in Fig. 8 dargestellten Lage die Schlauchleitung 32 mit einer weiteren Schlauchleitung 34 verbinden, welche an ein Saugrohr 35 angeschlossen ist, das mit dem nicht dargestellten Ansaugkrümmer des Motors des Kraftfahrzeuges in Verbindung steht.

Befindet sich das Schieberventil 33 in der in Fig. 8 dargestellten Lage, sind die Schlauchleitungen 32 und 34 untereinander verbunden, so daß der im Saugrohr 35 herrschende Unterdruck sich in den Schlauchleitungen 34 und 32 fortsetzt und durch die Bohrung 18 auch in der Unterdruckdose 11 erzeugt wird. Dadurch erfolgt in der oben genannten Weise die Umstellung der Spiegelscheibe 15 in die gekippte Abblendstellung.

Für eine automatische Steuerung der Umstellung der Spiegelscheibe 15 ist am Arm 2 eine Fotozelle 36 vorgesehen. Gelangt auf die Fotozelle 36 Licht einer bestimmten Mindeststärke, beispielsweise wenn hinter dem mit diesem Rückblickspiegel ausgestatteten Kraftfahrzeug ein Kraftzfahrzeug mit aufgeblendeten oder zu stark leuchtenden Scheinwerfern fährt, gibt die die Fotozelle 36 ein elektrisches Steuersignal ab, das über eine Verkabelung 37 einer Schaltelektronik 38 zugeleitet wird. Diese Schaltelektronik 38 gibt durch eine Verkabelung 39 ein Steuersignal an einen Schaltmagneten 40, der den Schieber des Schieberventils 33 verstellt. In Fig. 8 ist der Zustand dargestellt, bei dem auf die Fotozelle 36 eine erhöhte Lichtmenge auftrifft, so daß der Schieber des Schieberventils 33 in die Saugposition verschoben worden ist.

Sobald die auf die Fotozelle 36 einfallende Lichtmenge unter einen gewissen Schwellenwert sinkt, liefert die Fotozelle 36 kein Steuersignal mehr an die Schaltelektronik 38, so daß dem Schaltmagneten 40 auch kein Schaltsignal mehr zugeleitet wird.

Dementsprechend erfolgt eine Verstellung des Schiebers des Schieberventils 33 derart, daß die Verbindung zwischen den Schlauchleitungen 32 und 34 unterbrochen ist. Dadurch werden die Schlauchleitungen 32 und 34 mit der Außenluft verbunden, so daß der Unterdruck in der Unterdruckdose 11 abgebaut wird und die Spiegelscheibe 15 in ihre Ausgangsstellung zurückkehrt.

Um zu verhindern, daß die Fotozelle 36 auch am Tage und insbesondere bei besonders hellem Tageslicht der Schaltelektronik 38 ein Steuersignal zuführt, kann eine zweite Fotozelle als Vergleichsmesser vorgesehen sein. Diese zweite Fotozelle ist so anzuordnen, daß sie vom Scheinwerferlicht eines von hinten auffahrenden anderen Fahrzeuges nicht getroffen werden kann. Die Fotozelle 36 wird in diesem Fall nur dann wirksam, wenn die in beide Fotozellen einfallenden Lichtmengen einen bestimmten Mindestunterschied aufweisen.

An der Unterseite des Gehäuses 1 ist ein Handgriff 41 vorgesehen, mit dem die Tragplatte 6 der Unterdruckdose 11 auch von Hand verstellt werden kann, beispielsweise wenn die Schaltautomatik ausgefallen ist.

## Patentansprüche

1. Verstellbarer Rückblickspiegel für Kraftfahrzeuge wie PKW, mit einem an einem Tragarm (2) gehaltenen Lager und einer gegenüber diesem zwischen zwei Kipp-Stellungen mittels eines Unterdrucksystems verstellbaren Spiegelscheibe (15), wobei das Unterdrucksystem eine an eine Saugleitung (35) angeschlossene Unterdruckdose (11) aufweist, dadurch gekennzeichnet, daß als Auslöser zum Betätigen des Unterdrucksystems wenigstens eine Fotozelle (36), die entsprechend der Stärke des einfallenden Lichtes Steuersignale zum Verstellen eines Steuerventils (33) des Unterdrucksystems liefert, vorgesehen ist und daß die Unterdruckdose (11) des Unterdrucksystems aus einer am Tragarm (2) gehaltenen Lagerplatte (3), an der das Gehäuse (1), und einer gegenüber dieser kippbaren Tragplatte (6), an der die Spiegelscheibe (15) befestigt ist, besteht.

2. Rückblickspiegel nach Anspruch 1, dadurch gekennzeichnet, daß die Tragplatte (6) mit der Lagerplatte (3) nahe einem Rand über ein Schwenkgelenk (7, 8 ; 17) kippbar verbunden und dem Schwenkgelenk gegenüberliegend zwischen Tragplatte und Lagerplatte eine diese auseinanderdrückend vorgespannte Druckfeder (9 ; 23) vorgesehen ist.

3. Rückblickspiegel nach Anspruch 1 oder 2, dadurch gekennzeichnet, daß Lagerplatte (3) und Tragplatte (6) an ihren Rändern über eine verstellbare Dichtung (10 ; 22 ; 24) miteinander in Verbindung stehen.

4. Rückblickspiegel nach Anspruch 3, dadurch gekennzeichnet, daß die Dichtung (10 ; 24) ein faltbarer Balg ist, der beide Platten (3 und 6) übergreift.

5. Verstellbarer Rückblickspiegel für Kraftfahrzeuge wie PKW, mit einem an einem Tragarm (2) gehaltenen Lager und einer gegenüber diesem zwischen zwei Kipp-Stellungen mittels eines Unterdrucksystems verstellbaren Spiegelscheibe (15), wobei das Unterdrucksystem eine an eine Saugleitung (35) angeschlossene Unterdruckdose (11) aufweist, dadurch gekennzeichnet, daß als Auslöser zum Betätigen des Unterdrucksystems wenigstens eine Fotozelle (36), die entsprechend der Stärke des einfallenden Lichtes Steuersignale zum Verstellen eines Steuerventils (33) des Unterdrucksystems liefert, vorgesehen ist und daß das Gehäuse · (26) als Unterdruckdose ausgebildet ist und eine faltbare Zone (30, 31) in der Seitenwand erhält.

## Claims

1. An adjustable rear view mirror for vehicles, such as passenger cars, having a bearing secured on a supporting arm (2) and a mirror element (15) adjustable by means of a vacuum system with respect to the bearing between two tilt positions, wherein the vacuum system consists of a vacuum box (11) connected to a suction line (35), characterized in that as trigger for operating the vacuum system is provided at least one photocell (36) which produces control signals to adjust a control valve (33) of the vacuum system, depending on the intensity of the incident light, and that the vacuum box (11) of the vacuum system consists of a bearing plate (3) secured to a supporting arm (2) and to which a housing (1) is attached, and a supporting plate (6) which is tiltable with respect to the bearing plate (3), and to which the mirror element (15) is attached.

2. A rear view mirror according to claim 1, characterized in that the supporting plate (6) is tiltably connected to the bearing plate (3) by means of hinges (7, 8 ; 17) close to one edge thereof and a pressure spring (9 ; 23) is provided opposite the hinges (7, 8 ; 17) between said supporting plate (6) and said bearing plate (3), said pressure spring (9 ; 23) being pre-tensioned so as to force the supporting plate (6) and bearing plate (3) apart.

3. A rear view mirror according to either of claims 1 or 2, characterized in that the bearing plate (3) and the supporting plate (6) are interconnected at their edges via a movable seal (10 ; 22 ; 24).

4. A rear view mirror according to claim 3, characterized in that the seal (10 ; 24) is a collapsible bellows which overlaps the two plates (3 ; 6).

5. An adjustable rear view mirror for vehicles, such as passenger cars, having a bearing secured on a supporting arm (2) and a mirror element (15) adjustable by means of a vacuum system with respect to the bearing between two tilt positions, wherein the vacuum system consists of a vacuum box (11) connected to a suction line (35), characterized in that as trigger for operating the vacuum system is provided at least one photocell (36) which produces control signals to adjust a control valve (33) of the vacuum system, depending on the intensity of the incident light, and that the housing (26) constitutes a vacuum box, the housing (26) having a side wall which has a collapsible zone (30, 31).

## Revendications

1. Rétroviseur réglable pour véhicules automobiles tels que les voitures de tourisme, comprenant un support monté sur un bras porteur (2) et un miroir (15) qu'on peut régler par rapport à ce support entre deux positions de basculement au moyen d'un système à dépression, le système à dépression présentant une capsule à dépression (11) raccordée à une conduite d'aspiration (35), caractérisé en ce qu'il est prévu, comme déclencheur pour l'actionnement du système de dépression, au moins une cellule photo-électrique (36) qui, selon l'intensité de la lumière incidente, émet des signaux de commande pour la manœuvre d'un distributeur (33) du système à dépression, et en ce que la capsule à dépression (11) du système à dépression est composée d'une plaque support (3) fixée au bras porteur (2), à laquelle le boîtier (1) est fixé, et d'une plaque porteuse (6) pouvant basculer par rapport à cette plaque support et à laquelle le miroir (15) est fixé.

2. Rétroviseur selon la revendication 1, caractérisé en ce que la plaque porteuse (6) est reliée à la plaque support (3) à proximité d'un bord, de manière à pouvoir basculer par l'intermédiaire d'une articulation de basculement (7, 7 ; 17), et en ce qu'il est prévu, à l'opposé de l'articulation de basculement, entre la plaque porteuse et la plaque support, un ressort de compression (9 ; 23) précontraint et qui tend à écarter ces deux plaques l'une de l'autre.

3. Rétroviseur selon la revendication 1 ou la revendication 2, caractérisé en ce que la plaque support (3) et la plaque porteuse (6) sont réunies l'une à l'autre le long de leurs bords, par l'intermédiaire d'une garniture d'étanchéité mobile (10 ; 22 ; 24).

4. Rétroviseur selon la revendication 3, caractérisé en ce que la garniture d'étanchéité (10 ; 24) est un soufflet pliant qui embrasse les deux plaques (3 et 6).

5. Rétroviseur réglable pour véhicules automobiles, tels que les voitures de tourisme, comprenant un support monté sur un bras porteur (2), et un miroir (15) qui peut être réglé par rapport à ce support, au moyen d'un système à dépression, pour se déplacer entre deux positions de basculement, le système à dépression présentant une capsule à dépression (11) raccordée à une conduite d'aspiration (35), caractérisé en ce qu'il est prévu comme déclencheur pour l'actionnement du système à dépression, au moins une cellule photo-électrique (36) qui, selon l'intensité de la lumière incidente, envoie des signaux de commande pour la manœuvre d'un distributeur (33) du système à dépression, et en ce que le boîtier (26) est constitué par une capsule à dépression et comprend dans sa paroi latérale une zone (30, 31) capable de se plisser.

FIG. 1

FIG. 2

FIG. 3

FIG. 4

1

FIG. 7

FIG. 5

FIG. 6

FIG. 8